# EUROPÄISCHE PATENTSCHRIFT

(11) **EP 2 945 563 B1**
(45) Veröffentlichungstag und Bekanntmachung des Hinweises auf die Patenterteilung: **17.10.2018**
(21) Anmeldenummer: 14700853.6
(22) Anmeldetag: 15.01.2014
(51) Int. Cl.: A61C 8/00, A61C 13/00

(54) **VERFAHREN ZUR HERSTELLUNG EINES VERANKERUNGSELEMENTS**
METHOD FOR PRODUCING AN ANCHORING ELEMENT
PROCÉDÉ DE FABRICATION D'UN ÉLÉMENT D'ANCRAGE

(30) Priorität: 18.01.2013 DE 102013100529
(43) Veröffentlichungstag der Anmeldung: 25.11.2015
(73) Patentinhaber: BREDENT GMBH & CO. KG, 89250 Senden (DE)
(72) Erfinder: MIELECKE, Peter, 89073 Ulm (DE)
(74) Vertreter: Baur & Weber Patentanwälte PartG mbB
(86) Internationale Anmeldenummer: PCT/EP2014/050681
(87) Internationale Veröffentlichungsnummer: WO 2014/111413

(56) Entgegenhaltungen:
- EP-A1- 2 143 398
- EP-A1- 2 143 398
- WO-A1-2011/034780
- WO-A1-2011/034780
- WO-A2-2011/056450
- WO-A2-2011/056450
- US-A1- 2007 031 793
- US-A1- 2007 031 793

## Beschreibung

Die Erfindung betrifft ein Verfahren zum Überpressen eines Abutments oder eines Abutmentanteils eines Implantats mit einer zahnprothetischen Anordnung. Abutments sind aus dem allgemeinen Stand der Technik bekannt und werden auf vielfältige Weise in der Zahnprothetik verwendet. Ein Abutment ist ein Aufbauelement, das zur Befestigung von Kronen oder Zahnbrücken in der Zahnheilkunde dient. Ebenso werden Abutments als Primär- oder Sekundärhalterung von stegartigen oder teleskopartigen zahnprothetischen Anordnungen verwendet.
Ein Abutment weist üblicherweise einen metallischen Stift auf, der beispielsweise in Kombination mit einem Implantat als Verankerungspunkt in einem Kieferknochen vorgesehen ist. Auf der dem Verankerungspunkt gegenüberliegenden Seite wird beispielsweise eine Krone befestigt.
Bekannte Abutments werden üblicherweise aus Titan gefertigt. Nach dem Anfertigen eines Abdrucks der herzustellenden Zahnprothese wird anschließend eine Krone gefertigt, die dann auf das Abutment aufgeklebt oder aufgeschraubt wird.
Implantate sind ebenfalls aus dem allgemeinen Stand der Technik bekannt. Diese weisen auf einer dem Kieferknochen zugewandten Seite eine Schraubverbindung auf, so dass das Implantat im Kiefer verankerbar ist. Auf der gegenüberliegenden Seite wird beispielsweise eine Zahnkrone oder ähnliches aufgebracht.

Aus der WO 2011/056450 A2 ist ein vorgefertigtes Zahnimplantat bekannt, das ein vorgefertigtes Abutment, das ein subgingivales Ende mit einer Verankerung im Implantat und ein gegenüberliegendes Ende aufweist, wobei das gegenüberliegende Ende permanent mit einem schmelzbaren Dentalmaterial verbunden ist und das Abutment aus einem anderen Material als das schmelzbare Dentalmaterial gefertigt ist.

In der EP 2 143 398 A1 ist ein aus einem Keramikmaterial bestehendes Zahnimplantat mit einem Implantatkörper zum Verankern in einem Kieferknochen und mit einem in eine Halteaufnahme des Implantatkörpers einsetzbaren und fixierbaren Implantatpfosten beschrieben, dessen aus dem Implantatkörper herausstehender Tragabschnitt zur Befestigung eines Zahnersatzes ausgebildet ist und dessen in der Halteaufnahme fixierbarer Halteabschnitt sowie diese Halteaufnahme jeweils wenigstens in einem Teilbereich in der Einsteckrichtung einander entsprechend konusförmig verjüngt sind.

In der WO 2011/034780 A1 ist ein Verfahren zur Herstellung einer dentalen Restauration beschrieben. Das Verfahren umfasst das Anbringen eines Abutments zu einem Implantat in dem Mund eines Patienten und das Abtasten zumindest ein Teil des Abutments im Mund des Patienten, um eine digitale Oberflächendarstellung zu erfassen umd ein dreidimensionales digitales Modell der digitalen Oberflächendarstellung zu schaffen, sowie das Bilden einer Restauration aus dem dreidimensionalen digitalen Modell.

In der US 2007/0031793 A1 wird die Herstellung von provisorischen Kronen beschrieben, um vorübergehend Zahnimplantate wiederherzustellen. Die vorgefertigten provisorischen Kronen sind an den gingivalen Abschnitt der Anschlagvorrichtung eines Zahnimplantats oder Kragen eines Zahnimplantats angepasst. Die vorgefertigte provisorische Implantatkrone wird im allgemeinen als eine hohle Schale ausgeführt.
Bekanntlich treten beim Einsatz von zahnprothetischen Anordnungen oftmals hohe Kräfte in den Verankerungselementen auf, die zu mechanischen Belastungen führen können, so dass eventuell die Klebeverbindungen gelöst werden oder mechanische Schäden auftreten können.
Folglich besteht in der Technik ein Bedarf, oben genannte Nachteile zu überwinden und bekannte Verankerungselemente in Form von Abutments oder Implantaten weiter zu verbessern.

Es ist daher Aufgabe der Erfindung ein Verfahren zum Überpressen eines Abutments anzugeben, das eine weitere Verbesserung bei Belastung erreicht.

Diese Aufgabe wird durch die Merkmale des unabhängigen Patentanspruchs gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.
Es wird ein Verankerungselement für eine zahnprothetische Anordnung geschaffen, das in einem ersten Teilbereich in einem Kieferknochen oder Implantat verankerbar ist, und das geeignet ist, in einem zweiten Teilbereich ein zahnprothetisches Element aufzunehmen oder zu bilden, wobei das Verankerungselement zwischen dem ersten Teilbereich und dem zweiten Teilbereich einen in radialer Richtung vorstehenden Kragen aufweist, der den Umfang des Verankerungselements wenigstens teilweise umschließt, wobei der Bereich oberhalb des Kragens des Verankerungselements wenigstens teilweise vollflächig mit einem thermoplastischen Kunststoffmaterial bedeckt ist.

Demgemäß wird in einem Abutment auf einen Haltestift oder auf ein Implantat beispielsweise mittels Heißpressens ein Halteelement aufgebracht, das als Verbindung zwischen dem Haltestift und einem zahnprothetischen Element, wie z.B. einer Zahnkrone, verwendet wird oder durch entsprechende Formgebung dieses direkt bilden kann. Das zahnprothetische Element kann auf das Halteelement aufgeklebt oder mit dem Abutment oder Implantat durch Schrauben verbunden werden. Aufgrund der zwischenraumfreien Verbindung zwischen dem Halteelement und dem Haltestift ist das Abutment oder das Implantat in der Lage hohe Kräfte aufzunehmen, ohne sich zu lösen oder abzusplittern. Folglich können hohe Kaukräfte aufgenommen werden. Der oberhalb des Kragens angeordnete Teil des Haltestiftes wirkt als zusätzliche Versteifung.

Das Verankerungselement kann einen in ein Implantat einführbaren Haltestift, der vorzugsweise einen nicht rotationssymmetrischen Querschnitt aufweist, oder ein in einem Kieferknochen verankerbares Implantat umfassen.

Das Verankerungselement kann im zweiten Teilbereich eine aufgeraute Oberfläche aufweisen.

Versuche haben gezeigt, dass eine aufgeraute Oberfläche die Verbindung des Halteelements mit dem Haltestift oder dem Implantat mittels Heißpressens fördern kann. Die aufgeraute Oberfläche kann dabei eine Körnung im Bereich von einigen 100 µm aufweisen, wobei die genaue Ausgestaltung von den verwendeten Materialien des Abutments abhängig ist.

Gemäß einer Ausführungsform der Erfindung ist das Halteelement aus einem thermoplastischen Polymer, vorzugsweise aus PEEK, gefertigt.

PEEK (abgekürzt für Polyetheretherketon) ist als biokompatibler Werkstoff bei Verwendung in der Medizin im Wesentlichen physiologisch inert und folglich für den Patienten irritationsfrei. Daneben weist PEEK, aber auch andere Hochleistungspolymere, eine hohe Belastbarkeit bezüglich Kaukräften auf, so dass Bruchstabilitäten bis 1000 MPa erreicht werden können. Folglich bietet dieses Material im Vergleich zu einer Lithium-Disilikat-Keramik wesentlich höhere Sicherheitsreserven, was insbesondere bei der Verwendung im Seitenzahnbereich wichtig ist.

Gemäß einer weiteren Ausführungsform der Erfindung ist der Haltestift oder das Implantat aus einem Nichtedelmetall, vorzugsweise Titan, aus einer Keramik, insbesondere Aluminiumoxid, oder aus Zirconium-Dioxid gefertigt.

Titan ist im menschlichen Körper zur Verwendung in der Zahnprothetik bestens geeignet. Insbesondere im Zusammenspiel mit PEEK ergeben sich spannungsfreie Abutments, wobei das aus dem thermoplastischen Polymer bestehende Halteelement und der Titan-Haltestift lückenlos aneinander gefügt sind. Der zugrunde liegende physikalische oder chemische Effekt ist jedoch nicht vollständig bekannt. Es zeigt sich überraschenderweise, dass das heißverpresste Polymer mit dem Nichtedelmetall eine besonders stabile Verbindung bildet, die darüber hinaus frei von Rissen und Lücken ist. Eine Vermutung besteht darin, dass sich das auf der Oberfläche des Nichtedelmetalls bildende Metalloxid mit den Polymer-Ketten des Halteelements eine Verbindung eingeht, die dem Abutment besonders leistungsfähige Eigenschaften verleiht. Keramische Materialien wie Aluminiumoxid oder auch Zirconium-Dioxid können ebenfalls verwendet werden.

Gemäß einer weiteren Ausführungsform der Erfindung weist der Haltestift oder das Implantat auf seiner Außenseite im Bereich des Halteelements eine profilierte Oberfläche auf.

Eine profilierte Oberfläche bildet retentive Bereiche, so dass sich nach einem Heißverpressen das Kunststoffmaterial des thermoplastischen Polymers beim Abkühlen sich in diese Bereiche zurückziehen kann. Dies unterstützt die vollflächige, also lückenlose Bedeckung des Haltestifts mit dem thermoplastischen Kunststoff.

Die profilierte Oberfläche kann mehrere in axialer Richtung parallel angeordnete Rippen, vorzugsweise mit einem dreieckförmigen Querschnitt, umfassen.

Bei dem Verankerungselement kann das thermoplastische Polymer im zweiten Teilbereich so gebildet sein, das sich ein Halteelement ausbildet, so dass das Verankerungselement als Abutment verwendbar ist.

Das thermoplastische Polymer kann so geformt sein, das im zweiten Teilbereich eine Zahnkrone gebildet ist.

Das Verankerungselement kann als einstückiges, zwei-phasiges Implantat verwendbar sein.

Gemäß der Erfindung wird in ihrem zweiten Aspekt ein Verfahren zur Herstellung eines Abutments, oder eines Abutments oder zahnprothetischen Elements auf einem Implantat angegeben, bei dem folgende Schritte ausgeführt werden:
- Bereitstellen eines Haltestifts oder Implantats mit einem in radialer Richtung vorstehenden Kragen, der den Umfang des Haltestifts oder Implantats wenigstens teilweise umschließt, wobei ein erster Teilbereich des Haltestifts oder Implantats unterhalb des Kragens als Verankerung ausgebildet ist;
- Einbringen des Haltestifts oder Implantats in eine Pressform, so dass ein zweiter Teilbereich oberhalb des Kragens freigelegt ist;
- Auffüllen der Pressform mit einem Kunststoffgranulat; und
- Verpressen des Kunststoffgranulats unter Erhitzen, so dass im zweiten Teilbereich ein Halteelement oder Zahnkrone gebildet wird, wobei der Kragen und der Haltestift oder das Implantat im zweiten Teilbereich wenigstens teilweise vollflächig bedeckt sind.

Gemäß einer weiteren Ausführungsform des Verfahrens wird das Kunststoffmaterial als ein thermoplastisches Hochleistungspolymer, vorzugsweise PEEK, bereitgestellt.

Gemäß einer weiteren Ausführungsform des Verfahrens ist der Haltestift aus einem Nichtedelmetall, vorzugsweise Titan, aus einer Keramik, insbesondere Aluminiumoxid, oder aus Zirconium-Dioxid gefertigt.

Gemäß einer weiteren Ausführungsform des Verfahrens wird der Schritt des Verpressens des Kunststoffmaterials unter Erhitzen in einem Temperaturbereich zwischen 240°C und 450°C, vorzugsweise im Bereich zwischen 380°C und 400°C, durchgeführt.

Gemäß einer weiteren Ausführungsform des Verfahrens wird vor dem Schritt des Auffüllens der Muffelform mit dem Kunststoffmaterial ein Vorwärmschritt, vorzugsweise zwischen 600°C und 650°C, durchgeführt.

Gemäß einer weiteren Ausführungsform des Verfahrens wird der Schritt des Verpressens unter Vakuum durchgeführt.

Außerdem wird eine zahnprothetische Anordnung angegeben, die ein oben beschriebenes Verankerungselement aufweist, wobei das Haltelement des Abutments oder des Implantats als Trägerstruktur dient.

Bei der Zahnprothetische Anordnung kann eine Krone, eine Brücke oder ein stegartiger Zahnersatz mit einem oder mehreren Abutments verbunden sein.

Die Verbindung mit dem einem oder mehreren Abutments kann durch Verkleben oder Verschrauben herstellbar sein.

Des Weiteren wird ein Verfahren zum Überpressen eines Abutments oder eines Abutmentanteils eines Implantats mit einer zahnprothetischen Anordnung, bei dem folgende Schritte ausgeführt werden:
- Bereitstellen eines Abutments oder eines Implantats mit einem Halteelement;
- Einbringen des Abutments oder des Implantats in eine Muffelform;
- Bereitstellen eines Wachsmodells;
- Einbetten des Wachsmodells in der Muffelform;
- Auswachsen der Muffelform;
- Auffüllen der Muffelform mit einem Granulat eines thermoplastischen Polymers; und
- Heißverpressen des Granulats, um die zahnprothetischen Anordnung mit dem Abutment oder dem Implantat zu schaffen.

Des Weiteren kann bei diesem Verfahren das Hochleistungs-Polymer PEEK umfassen.

Das Hochleistungs-Polymer kann auch mit einem Keramikzusatz vermischt sein.

Schließlich wird ein Verfahren zur thermoplastischen Überpressung oder Überspritzung von zahnprothetischen Konfektionsteilen mit einem oben beschriebenen Verankerungselement angegeben, bei dem folgende Schritte ausgeführt werden:
- Bereitstellen eines Abutments oder eines Implantats mit einem Halteelement als zahnprothetische Konfektionsteile; und
- Überpressung oder Überspritzung der zahnprothetischen Konfektionsteile mit einem thermoplastischen Polymer.

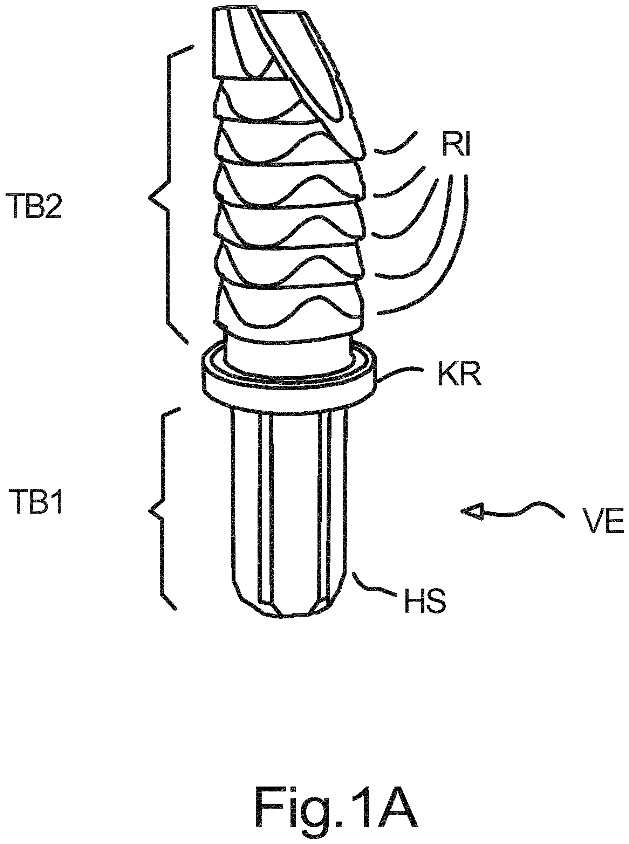

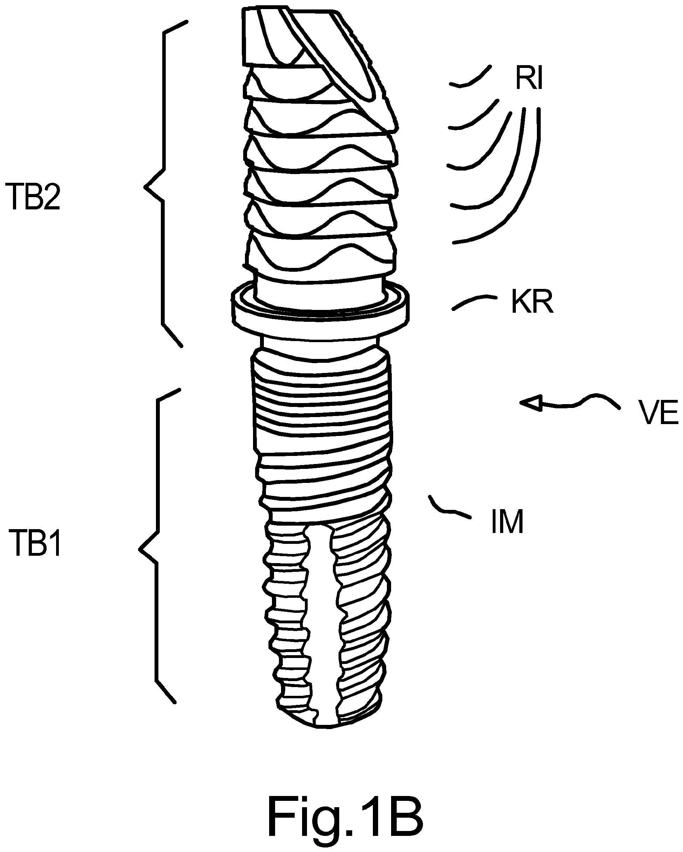

Nachfolgend werden einige Ausführungsbeispiele anhand der Zeichnungen näher erläutert. Es zeigen:
Fig. 1A einen Haltestift als Verankerungselement in einer Seitenansicht,
Fig. 1B ein als Verankerungselement Implantat in einer Seitenansicht,
Fig. 2 den Haltestift aus Fig. 1A in einer Draufsicht,
Fig. 3 ein erfindungsgemäßes Verankerungselement in einer Seitenansicht,
Fig. 4 eine Vorrichtung zur Durchführung eines erfindungsgemäßen Verfahrens,
Fig. 5 eine weitere Vorrichtung zur Durchführung eines erfindungsgemäßen Verfahrens,
Fig. 6 ein weiteres erfindungsgemäßes Verankerungselement in einer Seitenansicht, und
Fig. 7 ein weiteres erfindungsgemäßes Verankerungselement in einer Seitenansicht.
In den Figuren sind gleiche oder funktional gleich wirkende Bauteile mit dem gleichen Bezugszeichen versehen.
Zahnprothetische Anordnungen können zum einen direkt als sogenanntes Implantat in einem Kieferknochen fixiert werden oder über einen Haltestift in ein bereits im Kieferknochen verankertes Implantat befestigt werden. Beide Ausführungsformen, das heißt sowohl das Implantat als auch der Haltestift werden im Folgenden als Verankerungselement bezeichnet. Die Ausführung mit Haltestift wird nachfolgend in Fig. 1(A) erläutert, diejenige mit einem Implantat in Fig. 1(B).

Fig. 1(A) zeigt einen Haltestift HS als Verankerungselement für ein Abutment AB in einer perspektivischen Seitenansicht. Der Haltestift HS weist einen in radialer Richtung vorstehenden Kragen KR auf, der den Umfang des Haltestifts HS wenigstens teilweise umschließt. Unterhalb des Kragens KR ist ein erster Teilbereich TB1 ausgebildet, der als Verankerung in einem in Fig. 1(A) nicht dargestellten Implantat dient. Oberhalb des Kragens KR befindet sich der zweite Teilbereich TB2. Innerhalb des zweiten Teilbereichs TB2 weist der Haltestift HS an seiner Außenseite eine Profilierung auf. Diese ist in Fig. 1(A) als eine Anordnung von mehreren in axialer Richtung parallel angeordneten Rippen RI gezeigt, die den Umfang des Haltestifts HS im zweiten Teilbereich TB2 umschließen. Die Rippen RI weisen beispielsweise einen dreiecksförmigen Querschnitt auf, wobei andere Ausgestaltungen ebenfalls möglich sind.

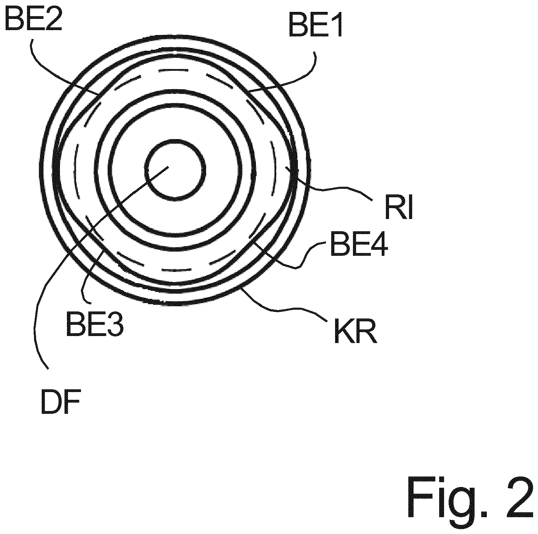

In Fig. 2 ist der Haltestift HS aus Fig. 1(A) in einer Querschnittsansicht gezeigt. Die Querschnittsansicht der Fig. 2 entspricht dabei einer Ansicht vom Ende des zweiten Teilbereichs TB2 her. Wie man Fig. 2 entnehmen kann, ist als der Durchmesser der Rippen RI kleiner als der des Kragens KR. Desweiteren sind die Rippen RI in mehreren Bereichen BE1, BE2, BE3 und BE4 mit einem verringerten Durchmesser ausgeführt, so dass sich insgesamt ein nicht rotationssymmetrischer Querschnitt des Haltestifts HS ergibt. Es sei angemerkt, dass der nicht rotationssymmetrische Querschnitt des Haltestifts HS auf vielfältige Weise erreicht werden kann, beispielsweise mit einer unterschiedlichen Anzahl von Bereichen mit verringertem Durchmesser, aber auch mittels Bereichen mit vergrößertem Durchmesser oder einer anderen Positionierung dieser Bereiche.

Ebenfalls in Fig. 2 ist gezeigt, dass das Abutment AB eine Durchführung DF aufweist, die das Abutment AB entlang seiner Längsachse vollständig durchdringt. Die Durchführung DF kann dazu verwendet werden, den Haltestift HS nach dem Einbringen in ein Implantat beispielsweise mittels einer Schraubverbindung zu arretieren.

Fig. 1 (B) zeigt ein Implantat IM als Verankerungselement VE in einer perspektivischen Seitenansicht. Das Implantat IM weist ebenfalls den in radialer Richtung vorstehenden Kragen KR auf, der den Umfang des Haltestifts HS wenigstens teilweise umschließt. Unterhalb des Kragens KR ist im ersten Teilbereich TB1 das schraubenförmige Implantat ausgebildet, das als Verankerung in einem in Fig. 1 (B) nicht dargestellten Kieferknochen dient. Oberhalb des Kragens KR befindet sich der zweite Teilbereich TB2. Innerhalb des zweiten Teilbereichs TB2 weist der Haltestift HS an seiner Außenseite die Profilierung auf. Diese ist in Fig. 1 (B) wiederum als eine Anordnung von mehreren in axialer Richtung parallel angeordneten Rippen RI gezeigt, die den Umfang des Haltestifts HS im zweiten Teilbereich TB2 umschließen.

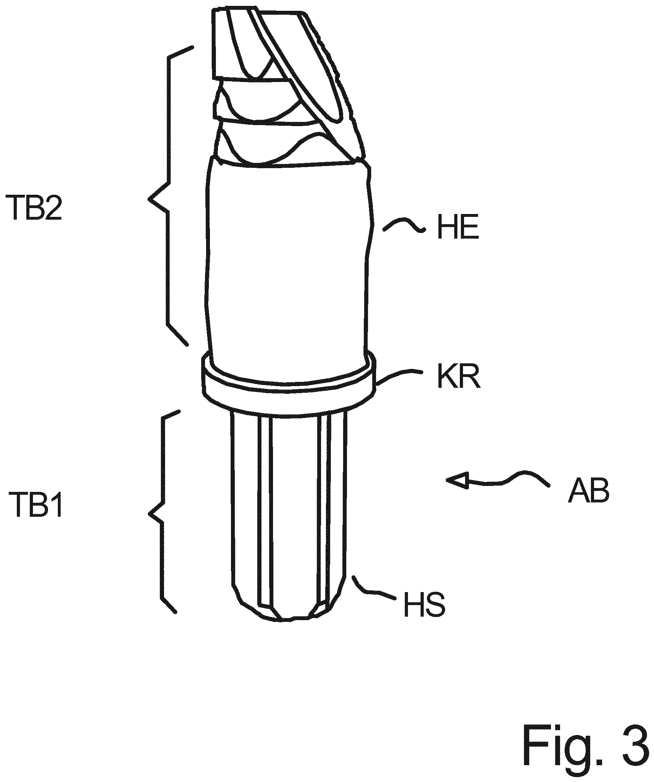

In Fig. 3 ist das Abutment AB gezeigt, das ausgehend von dem Haltestift HS gemäß Fig. 1(A) und 2 weiterentwickelt wurde, um ein sogenanntes Hybrid-Abutment zu bilden. Hybrid-Abutments weisen neben dem Haltestift HS ein zusätzliches Element auf, das als Basis für eine zahnprothetische Anordnung, wie z.B. eine Krone, herangezogen werden kann.
Wie Fig. 3 zu entnehmen ist, ist oberhalb des Kragens KR ein Halteelement HE angebracht, das den Kragen KR und den Haltestift HS teilweise bedeckt. Das Halteelement HE ist aus einem thermoplastischen Polymer, insbesondere PEEK gefertigt. Das Halteelement HE bedeckt dabei insbesondere die Rillen RI, die als retentive Bereiche dienen, so dass nach einem Heißverpressen das Kunststoffmaterial des thermoplastischen Polymers beim Abkühlen sich in diese Bereiche zurückziehen kann.
Der Haltestift HS ist aus einem Nichtedelmetall, insbesondere Titan, aus einer Keramik, insbesondere Aluminiumoxid, oder aus Zirconium-Dioxid gefertigt. Das in Fig. 3 gezeigte Abutment AB kann als Aufbauelement zur Befestigung von Kronen, Zahnbrücken oder Implantate in der Zahnheilkunde verwendet werden.

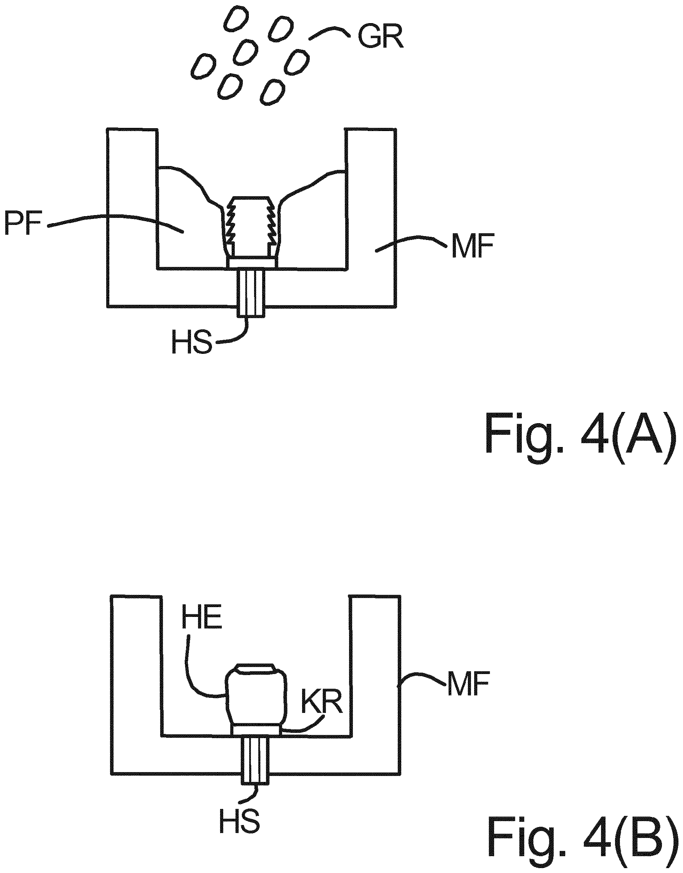

Unter Bezugnahme auf Fig. 4 wird im Folgenden ein Verfahren zur Herstellung eines Abutments AB näher erläutert. Dabei wird in einem ersten Schritt als Verankerungselement ein Haltestift, wie im Zusammenhang mit Fig. 1 (A) oder ein Implantat IM wie im Zusammenhang mit Fig. 1 (B) beschrieben, bereitgestellt. Der Haltestift HS oder das Implantat IM wird in eine Pressform PF eingebracht, so dass der zweite Teilbereich TB2 oberhalb des Kragens KR frei gelegt ist. Nach einem Ausformungsschritt wird ein Kunststoffgranulat GR bereitgestellt, das nach Verflüssigung durch Erwärmen in die Pressform PF eingefüllt wird. Das Kunststoffgranulat GR wird anschließend unter Erhitzen, beispielsweise im Vakuum, verpresst, so dass im zweiten Teilbereich TB2 das Halteelement HE gebildet wird. Das Halteelement HE wird als Abutmentanteil des Implantats IM bezeichnet.

Die einzustellende Temperatur wird von den verwendeten Materialen des Halteelements HE und des Haltestifts HS beziehungsweise Implantats IM bestimmt. Bei der Verwendung von PEEK und Titan oder Zirconium-Dioxid hat sich eine Temperatur von ungefähr 380°C als besonders wirkungsvoll herausgestellt, um zu erreichen, dass das Halteelement HE den Haltestift HS auf seiner Außenseite oberhalb des Kragens KR lückenlos umschließt. Diese Temperatur ist oberhalb des Schmelzpunktes von PEEK aber unterhalb desjenigen Temperaturbereichs, bei dem eine Degradierung der verwendeten Materialien beginnen würde.

Allgemein kann der Schritt des Verpressens des Kunststoffgranulats GR in einem Temperaturbereich zwischen 240° und 450°, vorzugsweise zwischen 380° und 400° durchgeführt werden.

Vor dem eigentlichen Schritt des Verpressens kann ein Vorwärmschritt beispielsweise bei 650° durchgeführt werden. Ebenso kann die Oberfläche im zweiten Teilbereich TB2 vor dem Verpressen aufgeraut werden.

Wie sich gezeigt hat, bildet sich bei der vorbeschriebenen Verfahrensführung das Halteelement HE mit dem Haltestift HS beziehungsweise Implantat IM eine lückenlose Verbindung, die sehr großen Belastungen Stand hält.

Wie bereits erwähnt, hat sich bei der Verwendung von PEEK für das Halteelement HE und Titan, Keramik oder Zirconium-Dioxid für den Haltestift HS insbesondere eine Temperatur des Heißverpressens von 380° als besonders wirkungsvoll herausgestellt. Dabei dienen die Rillen RI als retentive Bereiche die nach dem Erkalten des Kunststoffmaterials ein Aufschrumpfen begünstigen. Während des Heißverpressens verbinden sich vermutlich Molekülketten des PEEK mit oberflächlich oxidiertem Titan des Haltestifts HS beziehungsweise Implantats IM. Diese chemische Verbindung unterstützt das Anhaften des Kunststoffmaterials über dem Haltestift HS beziehungsweise Implantat IM, so dass die oben beschriebene lückenlose Umschließung erreicht wird.

Gemäß diesem Verfahren ist es möglich, ein Abutment AB zu bilden, das sehr große Kräfte aufnehmen kann. Das Abutment AB kann in einer zahnprothetischen Anordnung Verwendung finden, wobei das Haltelement HE des Abutments als Trägerstruktur für eine Krone, eine Brücke oder einen stegartigen Zahnersatz dient. Die Verbindung der zahnprothetischen Anordnung zu dem Abutment AB kann mittels Verschraubens oder Verklebens durchgeführt werden. Ebenso ist es möglich, ein Implantat IM zu bilden, bei dem der Abutmentanteil durch das Halteelement HE gebildet wird.

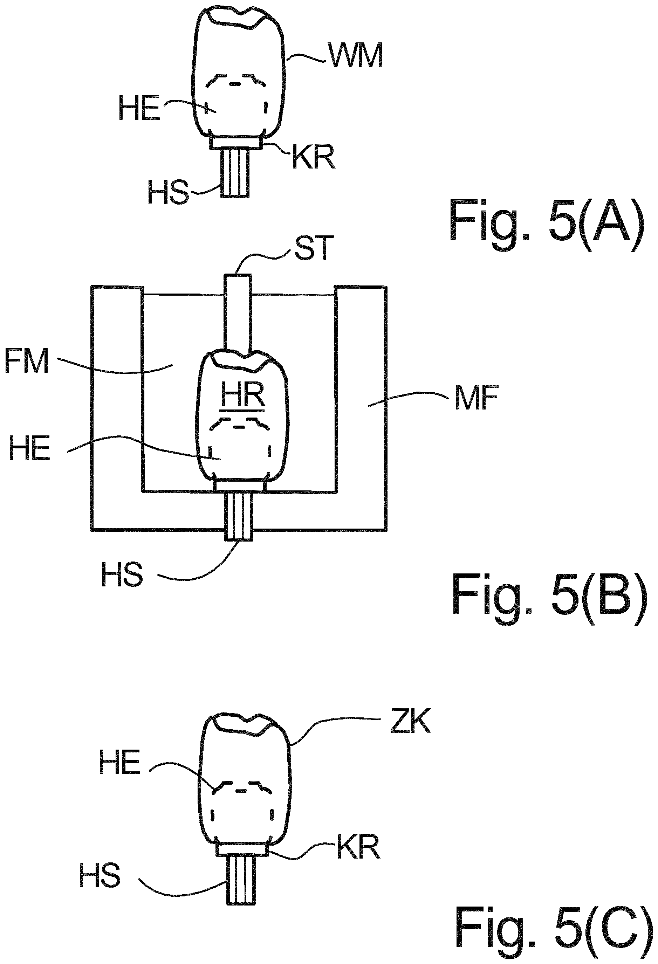

Unter Bezugnahme auf die Fig. 5 (A) bis 5 (C) wird im Folgenden ein Verfahren Verfahren zum Überpressen eines Abutments oder eines Abutmentanteils eines Implantats mit einer zahnprothetischen Anordnung erläutert.

Dazu wird in einem ersten Schritt ein Abutment AB, wie im Zusammenhang mit Fig. 3 beschrieben, bereit gestellt. Das Abutment AB wird im Bereich des Halteelement HE mit einem Wachsmodell WM versehen, das in dem gezeigten Beispiel die spätere Zahnkrone oder individuelles Abutment repräsentieren soll. Das Abutment AB wird zusammen mit dem Wachsmodell WM in eine Muffelform MF eingebracht, die anschließend mittels eines geeigneten Füllmaterials FM versehen wird, um den Bereich außerhalb des Wachsmodells WM abzudecken. Während des Einbettens der des Wachsmodells WM in dem Füllmaterial FM erfolgt auch ein Anstiften, um einen Zugang zu dem Bereich des Wachsmodells WM zu erhalten.

Das Anstiften ist in Fig. 5 (B) schematisch durch den Stift ST angedeutet. Hierbei ist es erwähnenswert, dass das Abutment AB eine Durchführung DF umfasst, die das Abutment AB in axialer Richtung vollständig durchdringt. Durch Erhitzen erfolgt ein sogenanntes Auswachsen, wobei das Wachsmodell WM zu schmelzen beginnt und ausbrennt, wobei die poröse Struktur des Füllmaterials die Bildung eines Hohlraums HR innerhalb des Füllmaterials FM unterstützt. Folglich verbleibt innerhalb des Füllmaterials FM der Hohlraum HR, wie in Fig. 5 (B) gezeigt ist.

Anschließend erfolgt ein Füllen der Muffelform MF mittels eines Kunststoffgranulats, das zur Vorbereitung des Pressens mittels eines nicht gezeigten Stempels komprimiert wird. Das Kunststoffgranulat kann wiederum als Hochleistungspolymer PEEK bereit gestellt werden. Zusätzlich ist es denkbar, dass das PEEK-Material mit einem Keramikzusatz vermischt wird, um beispielsweise eine Farbanpassung der Zahnkrone zu erzielen.

Nachdem die Muffelform MF mit dem Granulat gefüllt wurde, erfolgt das Aufheizen des Materials in der Muffel in einem Vorwärmofen bei 400°C, danach erfolgt ein Heißverpressen des Granulats, wobei die Verpressung im Bereich um die 380° C durchgeführt wird. Das eigentliche Verpressen erfolgt dabei im Vakuum, so dass die spätere Zahnkrone blasenfrei gebildet werden kann.

Nach dem Abkühlen erhält man nun eine Zahnkrone ZK, wie in Fig. 5 (C) gezeigt ist. Die Zahnkrone ZK sitzt dabei auf dem Halteelement HE, wobei der Haltestift HS als Verankerungspunkt in einem Implantat herangezogen werden kann.

In einer anderen Ausführung des erfindungsgemäßen Verfahrens wird als Ausgangspunkt ein Abutment AB gewählt, das dem in Fig. 1(A) gezeigtem entspricht. Das Abutment AB weist folglich kein Halteelement HE auf. Durch das Heißverpressen mit dem thermoplastischen Polymer wird folglich eine Struktur erzeugt, die der in Fig. 5(C) entspricht, wobei das Umschließen des Haltestifts HS mit dem thermoplastischen Polymer in einem einzigen Schritt ohne vorherige Bildung eines Haltelements HE durchgeführt wird.

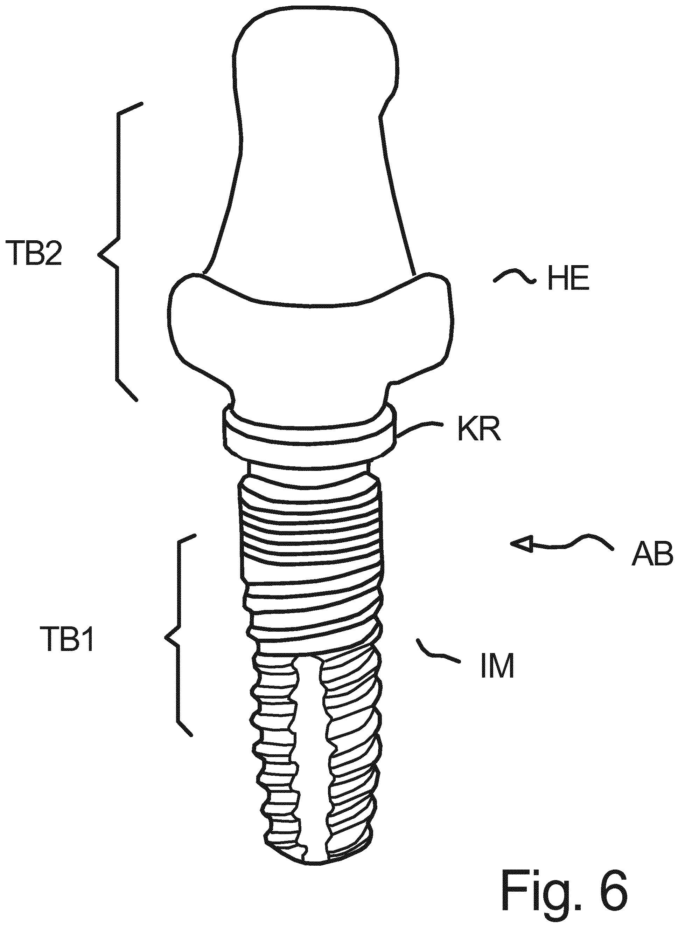

Unter Bezugnahme auf Fig. 6 wird eine weitere Ausführungsform der Erfindung erläutert.

Wie Fig. 6 zu entnehmen ist, ist oberhalb des Kragens KR wiederum das Halteelement HE als Abutmentanteil aus PEEK angebracht. Darunter befindet sich das Implantat IM. Das Halteelement HE bedeckt dabei oberhalb des Implantats IM insbesondere die Rillen RI, die als retentive Bereiche dienen, so dass nach einem Heißverpressen das Kunststoffmaterial des thermoplastischen Polymers beim Abkühlen sich in diese Bereiche zurückziehen kann. Das Implantat IM ist aus einem Nichtedelmetall, insbesondere Titan, aus einer Keramik, insbesondere Aluminiumoxid, oder aus Zirconium-Dioxid gefertigt.

Nach Fertigstellung ist das das Halteelement HE aus PEEK bearbeitbar und damit individualisierbar, so dass nach dem Einsetzen in einen Kieferknochen das in Fig. 6 gezeigte Implantat IM als Aufbauelement zur Befestigung von Kronen oder Zahnbrücken in der Zahnheilkunde verwendet werden kann. Die gezeigte Ausführungsform kann als einstückiges, zwei-phasiges Implantat bezeichnet werden.

Das Herstellungsverfahren folgt dabei denn in Zusammenhang mit Fig. 4 beschriebenem, wobei anstelle der Muffelform MF eine Stahlform zum Einsatz kommen kann, um hygienischen Anforderungen während des Einsetzens des Implantats IM in einen Kieferknochen zu genügen.

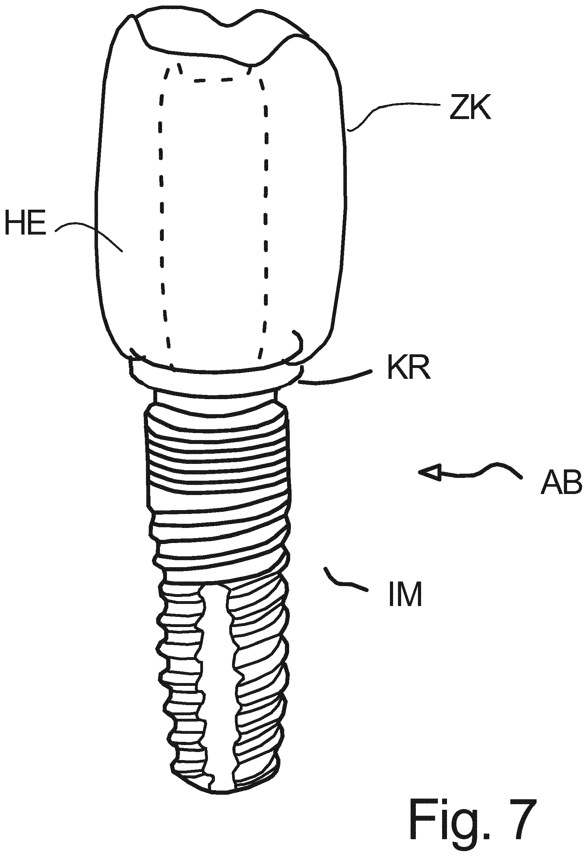

Eine weitere Ausführungsform ist in Fig. 7 gezeigt. Dabei wird eine Zahnkrone ZK direkt auf ein Implantat aufgespritzt. Diese Vorgehensweise erzeugt unmittelbar ein zahnprothetisches Element, das in einen Kieferknochen eingesetzt werden kann.

Des Weiteren ist es möglich, die Erfindung in einem Verfahren zur thermoplastischen Überpressung oder Überspritzung von zahnprothetischen Konfektionsteilen zu nutzen. Dabei wird das Verankerungselement entweder als Abutment AB gemäß Fig. 3 oder als Implantat gemäß Fig. 6 bereitgestellt. Anschließend erfolgt ein Überpressen oder Überspritzen der zahnprothetischen Konfektionsteile mit dem thermoplastischen Polymer.

Das erfindungsgemäße Verankerungselement bzw. das erfindungsgemäße Verfahren weisen Vorteile bezüglich der im Stand der Technik bekannten Gold- und Keramikkonstruktionen auf. Zum einen erweist sich das ausgehärtete PEEK als leicht zu bearbeiten und weist keinerlei Wechselwirkungen mit anderen Materialien auf. Aufgrund der hohen Belastbarkeit und Bruchfestigkeit bei gleichzeitig geringem Gewicht wird eine sehr robuste Zahnprothese geschaffen. Diese kann passgenau, reproduzierbar und frei von Spannungsrissen eingesetzt werden. Durch Zusätze, wie z. B. Keramikmaterialien, ist die aus einem Hochleistungspolymer bestehende Zahnkrone ZK farblich an die übrigen Zähne oder Zahnkronen angleichbar und es treten keinerlei Zahnfleischirritationen auf.

Es hat sich gezeigt, dass das verwendete Hochleistungspolymer PEEK Kaukräfte bis zu 1.000 MPa aufnehmen kann, so dass eine hohe Bruchstabilität bei gleichzeitig hohen Sicherheitsreserven erreicht wird. Dieses Material ist darüber hinaus biokompatibel, wie sich in der Humanmedizin beispielsweise bei künstlichen Hüftprothesen, Fingergelenken oder Herzklappen bereits gezeigt hat.

Das gezeigte Beispiel mit einer Zahnkrone ZK dient lediglich der Veranschaulichung der Erfindung. Es versteht sich von selbst, dass das erfindungsgemäße Abutment AB bzw. das erfindungsgemäße Verfahren in vielerlei zahnprothetischen Anwendungen eingesetzt werden kann. Diese können beispielsweise Kronenbrücken oder ähnliche Stegkonstruktionen umfassen.

## Patentansprüche

1. Verfahren zum Überpressen eines Abutments oder eines Abutmentanteils eines Implantats mit einer zahnprothetischen Anordnung, bei dem folgende Schritte ausgeführt werden:
- Bereitstellen eines Abutments (AB) oder eines Implantats (IM) mit einem Halteelement (HE);
- Bereitstellen eines Wachsmodells (WM), so dass das Abutment (AB) oder Implantat (IM) im Bereich des Halteelements (HE) mit dem Wachsmodell versehen wird;
- Einbringen des Abutments (AB) oder des Implantats (IM) in eine Muffelform (MF);
- Einbetten des Wachsmodells (WM) in der Muffelform (MF);
- Auswachsen der Muffelform (MF);
- Auffüllen der Muffelform (MF) mit einem Granulat eines thermoplastischen Polymers; und
- Heißverpressen des Granulats, um die zahnprothetische Anordnung (ZK) mit dem Abutment (AB) oder dem Implantat (IM) zu schaffen.

2. Verfahren nach Anspruch 1, bei dem als thermoplastisches Polymer PEEK verwendet wird.

3. Verfahren nach Anspruch 1 oder 2, bei dem das thermoplastische Polymer mit einem Keramikzusatz vermischt ist.

4. Verfahren nach einem der Ansprüche 1 bis 3, bei dem das Abutment (AB) oder der Abutmentanteil des Implantats (IM) als Verankerungselement bereitgestellt wird, das in einem ersten Teilbereich (TB1) in einem Kieferknochen oder Implantat verankerbar ist, und das geeignet ist, in einem zweiten Teilbereich (TB2) ein zahnprothetisches Element (ZK) aufzunehmen oder zu bilden, wobei das Verankerungselement zwischen dem ersten Teilbereich (TB1) und dem zweiten Teilbereich (TB2) einen in radialer Richtung vorstehenden Kragen (KR) aufweist, der den Umfang des Verankerungselements wenigstens teilweise umschließt, wobei der Bereich oberhalb des Kragens (KR) des Verankerungselements wenigstens teilweise vollflächig mit dem thermoplastischen Kunststoffmaterial bedeckt ist.

5. Verfahren nach einem der Ansprüche 1 bis 4, bei dem das Abutment (AB) oder das Implantat (IM) aus einem Nichtedelmetall, vorzugsweise Titan oder einer Titanlegierung, aus einer Keramik, insbesondere Aluminiumoxid, oder aus Zirconium-Dioxid, oder aus einem dentaltauglichen Material gefertigt wird.

6. Verfahren nach einem der Ansprüche 1 bis 5, bei dem der Schritt des Verpressens des Kunststoffgranulates (GR) zum Aufpressen des Abutmentanteils auf dem Implantat (IM) oder dem Abutment (AB) unter Erhitzen in einem Temperaturbereich zwischen 240°C und 450°C, vorzugsweise im Bereich zwischen 380°C und 400°C, durchgeführt wird.

7. Verfahren nach einem der Ansprüche 1 bis 6, bei dem vor dem Schritt des Auffüllens der Muffelform (MF) mit dem Kunststoffgranulat (GR) ein Vorwärmschritt, vorzugsweise zwischen 600°C und 650°C, durchgeführt wird.

8. Verfahren nach einem der Ansprüche 1 bis 7, bei dem der Schritt des Verpressens unter Vakuum durchgeführt wird.

9. Verfahren nach Anspruch 1 bis 8, bei dem das Verankerungselement einen in ein Implantat einführbaren Haltestift (HS), der vorzugsweise einen nicht rotationssymmetrischen Querschnitt aufweist, oder ein in einem Kieferknochen verankerbares Implantat (IM) umfasst.

10. Verfahren nach Anspruch 9, bei dem das Verankerungselement im zweiten Teilbereich (TB2) eine aufgeraute Oberfläche aufweist.

11. Verfahren nach einem der Ansprüche 9 oder 10, bei dem das Verankerungselement auf seiner Außenseite im zweiten Teilbereich (TB2) eine profilierte Oberfläche als retentiven Bereich aufweist.

12. Verfahren nach Anspruch 11, bei dem die profilierte Oberfläche mehrere in axialer Richtung parallel angeordnete Rippen (RI), vorzugsweise mit einem dreieckförmigen Querschnitt, umfasst.

## Claims

1. Method for overmoulding an abutment or an abutment portion of an implant with a dental prosthetic arrangement, in which method the following steps are carried out:
- making available an abutment (AB) or an implant (IM) with a holding element (HE);
- making available a wax model (WM) such that the abutment (AB) or implant (IM) is provided with the wax model in the region of the holding element (HE) ;
- inserting the abutment (AB) or the implant (IM) into a muffle mould (MF);
- embedding the wax model (WM) in the muffle mould (MF);
- dewaxing the muffle mould (MF);
- filling the muffle mould (MF) with granules of a thermoplastic polymer; and
- hot-pressing the granules in order to create the dental prosthetic arrangement (ZK) with the abutment (AB) or the implant (IM).

2. Method according to Claim 1, in which method PEEK is used as thermoplastic polymer.

3. Method according to Claim 1 or 2, in which method the thermoplastic polymer is mixed with a ceramic additive.

4. Method according to one of Claims 1 to 3, in which method the abutment (AB) or the abutment portion of the implant (IM) is made available as an anchoring element which can be anchored in a jaw bone or implant in a first subregion (TB1) and is suitable for receiving or forming a dental prosthetic element (ZK) in a second subregion (TB2), wherein the anchoring element has, between the first subregion (TB1) and the second subregion (TB2), a radially projecting collar (KR) which at least partially encloses the circumference of the anchoring element, wherein the region above the collar (KR) of the anchoring element is at least in part fully covered with a thermoplastic material.

5. Method according to one of Claims 1 to 4, in which method the abutment (AB) or the implant (IM) is produced from a base metal, preferably titanium or a titanium alloy, from a ceramic, in particular aluminium oxide, or from zirconium dioxide, or from a material suitable for use in dentistry.

6. Method according to one of Claims 1 to 5, in which method the step of pressing the plastic granules (GR) for pressing the abutment portion on the implant (IM) or the abutment (AB) is carried out by heating in a temperature range of between 240°C and 450°C, preferably in the range of between 380°C and 400°C.

7. Method according to one of Claims 1 to 6, in which method the step of filling the muffle mould (MF) with the plastic granules (GR) is preceded by a preheating step, which is preferably carried out at between 600°C and 650°C.

8. Method according to one of Claims 1 to 7, in which method the pressing step is carried out under vacuum.

9. Method according to Claims 1 to 8, in which method the anchoring element comprises a retaining pin (HS) which can be inserted into an implant and which preferably has a non-rotationally symmetrical cross section, or an implant (IM) which can be anchored in a jaw bone.

10. Method according to Claim 9, in which method the anchoring element has a roughened surface in the second subregion (TB2).

11. Method according to either of Claims 9 and 10, in which method the anchoring element has a profiled surface as retentive region on its outside in the second subregion (TB2).

12. Method according to Claim 11, in which method the profiled surface comprises a plurality of ribs (RI) arranged in parallel in the axial direction, preferably with a triangular cross section.

## Revendications

1. Procédé de surpression d'un pilier ou d'une partie de pilier d'un implant avec un système de prothèse dentaire, selon lequel les étapes suivantes sont réalisées :
- la préparation d'un pilier (AB) ou d'un implant (IM) comprenant un élément support (HE) ;
- la préparation d'un modèle en cire (WM) de telle sorte que le pilier (AB) ou l'implant (IM) soit muni du modèle en cire dans la zone de l'élément support (HE) ;
- l'introduction du pilier (AB) ou de l'implant (IM) dans un moule à moufle (MF) ;
- l'inclusion du modèle en cire (WM) dans le moule à moufle (MF) ;
- le lavage du moule à moufle (MF) ;
- le remplissage du moule à moufle (MF) avec un granulat d'un polymère thermoplastique ; et
- la compression à chaud du granulat afin d'obtenir le dispositif de prothèse dentaire (ZK) comprenant le pilier (AB) ou l'implant (IM).

2. Procédé selon la revendication 1, selon lequel la PEEK est utilisée en tant que polymère thermoplastique.

3. Procédé selon la revendication 1 ou 2, selon lequel le polymère thermoplastique est mélangé avec un additif céramique.

4. Procédé selon l'une quelconque des revendications 1 à 3, selon lequel le pilier (AB) ou la partie de pilier de l'implant (IM) est préparé sous la forme d'un élément d'ancrage, qui peut être ancré dans une première partie (TB1) dans un os maxillaire ou un implant, et qui est approprié pour recevoir ou former dans une seconde partie (TB2) un élément (ZK) de prothèse dentaire, l'élément d'ancrage présentant entre la première partie (TB1) et la seconde partie (TB2) un collet (KR) en saillie en direction radiale qui entoure au moins partiellement la circonférence de l'élément d'ancrage, la partie se trouvant au-dessus du collet (KR) de l'élément d'ancrage étant recouverte au moins en partie sur toute sa surface d'un matériau plastique thermoplastique.

5. Procédé selon l'une quelconque des revendications 1 à 4, selon lequel le pilier (AB) ou l'implant (IM) est fabriqué en un métal non noble, de préférence en titane ou en un alliage de titane, en une céramique, notamment en oxyde d'aluminium, ou en dioxyde de zirconium, ou en un matériau approprié pour les applications dentaires.

6. Procédé selon l'une quelconque des revendications 1 à 5, selon lequel l'étape d'injection du granulat plastique (GR) pour la compression de la partie de pilier sur l'implant (IM) ou le pilier (AB) est réalisée avec chauffage dans une plage de température comprise entre 240 °C et 450 °C, de préférence dans la plage comprise entre 380 °C et 400 °C.

7. Procédé selon l'une quelconque des revendications 1 à 6, selon lequel une étape de préchauffage, de préférence entre 600 °C et 650 °C, est réalisée avant l'étape de remplissage du moule à moufle (MF) avec le granulat plastique (GR).

8. Procédé selon l'une quelconque des revendications 1 à 7, selon lequel l'étape d'injection est réalisée sous vide.

9. Procédé selon les revendications 1 à 8, selon lequel l'élément d'ancrage comprend une goupille support (HS) pouvant être insérée dans un implant, qui comprend de préférence une section transversale non symétrique par rotation, ou un implant (IM) pouvant être ancré dans un os maxillaire.

10. Procédé selon la revendication 9, selon lequel l'élément d'ancrage comprend une surface rugosifiée dans la seconde partie (TB2).

11. Procédé selon l'une quelconque des revendications 9 ou 10, selon lequel l'élément d'ancrage comprend sur son côté extérieur dans la seconde zone (TB2) une surface profilée en tant que zone de rétention.

12. Procédé selon la revendication 11, selon lequel la surface profilée comprend plusieurs rainures (RI) agencées en parallèle dans la direction axiale, de préférence ayant une section transversale triangulaire.
